# EUROPEAN PATENT APPLICATION

(11) **EP 4 456 229 A1**
(43) Date of publication of application: **30.10.2024**
(21) Application number: 24171796.6
(22) Date of filing: 23.04.2024
(51) Int. Cl.: H01M 10/052, H01M 50/417, H01M 50/426, H01M 50/443, H01M 50/446, H01M 50/449, H01M 50/457, H01M 50/491

(54) **SEPARATOR, ELECTROCHEMICAL DEVICE, AND ELECTRONIC DEVICE**

(30) Priority: 23.04.2023 CN 202310443138
(71) Applicant: Ningde Amperex Technology Limited, Ningde City, Fujian Province 352100 (CN)
(72) Inventor: LIN, Xiaoping, Ningde City, Fujian Province 352100 (CN)
(74) Representative: Icosa

(57) **Abstract**

A separator includes a polymer layer and a porous material layer. The porous material layer includes a porous material. The porous material includes a metal-organic framework material, a covalent organic framework material, a molecular sieve material, or a microporous polymer. The separator contains micropores and sub-nanopores. By applying the separator to an electrochemical device, solvent molecules in an electrolyte solution can be confined within pore channels of the separator while the electrolyte solution penetrates the separator, thereby not only reducing side reactions between lithium metal and the electrolyte solution during cycling of the electrochemical device and improving the cycle performance of the electrochemical device, but also increasing the mobility of lithium ions and improving the electrochemical performance of the electrochemical device.

## Description

### TECHNICAL FIELD

This application relates to the technical field of electrochemistry, and in particular, to a separator, an electrochemical device, and an electronic device.

### BACKGROUND

Electrochemical devices, such as a lithium-ion battery, exhibit advantages such as a high energy density, a high working voltage, a low self-discharge rate, a small size, and a light weight, and have been widely applied in the field of consumer electronics. Lithium metal possesses a high theoretical specific capacity, and enjoys a broad application prospect for use in lithium metal batteries. Therefore, the lithium metal used as a negative electrode of the battery in conjunction with a positive electrode containing a positive electrode material of a high energy density can greatly increase the energy density and working voltage of the lithium metal battery.

However, nonuniformity of the current density and the lithium ion concentration in an electrolyte solution during cycling gives rise to lithium dendrites on the negative electrode plate, thereby reducing a deposition density of the lithium metal greatly, and in turn, impairing the cycle life of the lithium metal battery.

### SUMMARY

An objective of this application is to provide a separator, an electrochemical device, and an electronic device to prolong the cycle performance of the electrochemical device. Specific technical solutions are as follows:
A first aspect of this application provides a separator. The separator contains nanoscale and sub-nanoscale pore structures. The separator includes a polymer layer and a porous material layer. The porous material layer includes a porous material. The porous material includes a metal-organic framework material, a covalent organic framework material, a molecular sieve material, or a microporous polymer. A pore channel diameter of the porous material is 0.1 nm to 10 nm. A thickness of the porous material layer is 1 µm to 8 µm. The separator according to this application contains micropores and sub-nanopores. By applying the separator of this application to an electrochemical device, on the one hand, this application reduces side reactions between lithium metal and the electrolyte solution during cycling of the electrochemical device so as to improve the cycle performance of the electrochemical device. On the other hand, this application increases the mobility of lithium ions and improves the electrochemical performance of the electrochemical device. In addition, this can increase the density and uniformity of lithium metal deposited on the surface of the negative electrode plate, slow down growth of lithium dendrites, and alleviate the short-circuit problem of the electrochemical device during cycling, thereby prolonging the cycle life of the electrochemical device. In this application, a sub-nanopore means a pore of a diameter less than or equal to 1 nm, a micropore means a pore of a diameter less than or equal to 2 nm, and a nanopore means a pore of a diameter less than or equal to 100 nm.

In some embodiments of this application, the separator includes the polymer layer and the porous material layer disposed on one surface of the polymer layer; or the separator includes the polymer layer and the porous material layer disposed on two surfaces of the polymer layer; or the separator includes the porous material layer and the polymer layer disposed on two surfaces of the porous material layer. The separator of the above structure is capable of confining solvent molecules in the electrolyte solution within the pore channels of the separator. When applied to an electrochemical device, the separator with the above features is conducive to prolonging the cycle life of the electrochemical device.

In some embodiments of this application, a porosity of the separator is 20% to 80%. By adjusting the porosity of the separator to fall within the above range, the separator is more capable of confining the electrolyte solution within a specified region, thereby alleviating the short-circuit problem of the electrochemical device during cycling, and prolonging the cycle life of the electrochemical device.

In some embodiments of this application, the metal-organic framework material includes at least one of MOF-69C, MOF-74, MOF-5, ZIF-67, ZIF-8, MIL-100(Cr), MIL-100(Fe), UIO-66, PCN61, or CuBTC; the covalent organic framework material includes at least one of COF-1, COF-5, COF-012, COF-103, COF-105, CTF-1, or JUC-505; the molecular sieve material includes at least one of MCM-41, SAPO-34, 3A molecular sieve, 4A molecular sieve, 5A molecular sieve, or 13X molecular sieve; and, the microporous polymer includes PIM-1. Selecting the metal-organic framework material, covalent organic framework material, molecular sieve material, or microporous polymer that fall within the above ranges endows the separator with good mechanical properties and high absorptivity of electrolyte solution, and makes it convenient to confine the electrolyte solution within the pore channels of the porous material. When applied to an electrochemical device, the above separator is conducive to prolonging the cycle life of the electrochemical device.

In some embodiments of this application, the separator satisfies at least one of the following features: (1) a particle diameter of the porous material is 50 nm to 1000 nm; (2) a specific surface area of the porous material is 200 m²/g to 2000 m²/g; (3) a pore diameter of a pore structure of the polymer layer is 10 nm to 200 nm; (4) a thickness of the polymer layer is 3 µm to 30 µm; (5) a material of the polymer layer includes at least one of polyethylene, polypropylene, polyvinylidene difluoride, polyimide, polyamide, polyacrylonitrile, polyethylene glycol, polyphenylene ether, polypropylene carbonate, polymethyl methacrylate, polyethylene terephthalate, polyethylene oxide, polyvinylidene difluoride-hexafluoropropylene, or polyvinylidene difluoride-chlorotrifluoroethylene; or (6) a pore channel diameter of the porous material is 0.1 nm to 5 nm. When applied to an electrochemical device, the separator with the above features can improve the cycle performance of the electrochemical device, alleviate the short-circuit problem of the electrochemical device during cycling, and prolong the cycle life of the electrochemical device.

In some embodiments of this application, the separator satisfies at least one of the following features: (1) a pore channel diameter of the separator is 10 nm to 150 nm; or (2) charged polymers or metal ions are included inside a pore channel of the separator, the charged polymers include at least one of sodium polystyrene sulfonate, poly N-2-(dimethylaminopropyl)methacrylamide, or polyacrylic acid, and the metal ions include at least one of Cu²⁺, Zn²⁺, or Co³⁺. When applied to an electrochemical device, the separator with the above features can improve the cycle performance of the electrochemical device, alleviate the short-circuit problem of the electrochemical device during cycling, and prolong the cycle life of the electrochemical device.

In some embodiments of this application, the separator satisfies at least one of the following features: (1) a pore channel diameter of the separator is 30 nm to 80 nm; (2) a porosity of the separator is 35% to 65%; (3) a pore channel diameter of the porous material is 0.1 nm to 1 nm; (4) a thickness of the porous material layer is 1 µm to 5 µm; (5) a pore diameter of a pore structure of the polymer layer is 20 nm to 80 nm; (6) a thickness of the polymer layer is 5 µm to 16 µm; or (7) a particle diameter of the porous material is 50 nm to 800 nm. When applied to an electrochemical device, the separator with the above features is conducive to prolonging the cycle life of the electrochemical device.

A second aspect of this application provides an electrochemical device. The electrochemical device includes an electrode assembly. The electrode assembly includes a positive electrode plate, a negative electrode plate, and the separator according to the first aspect of this application. The separator according to this application can confine the electrolyte solution within the pore channels of the porous material, thereby improving the cycle performance of the electrochemical device, alleviate the short-circuit problem of the electrochemical device during cycling, and prolong the cycle life of the electrochemical device. Therefore, the electrochemical device according to this application possesses a relatively long cycle life.

A third aspect of this application provides an electrochemical device. The electrochemical device includes an electrode assembly. The electrode assembly includes a positive electrode plate, a negative electrode plate, and the separator according to the first aspect of this application. The separator includes a polymer layer and a porous material layer disposed on one surface of the polymer layer. A side, coated with the porous material layer, of the separator is oriented toward the negative electrode plate. The electrochemical device with the above features exhibits a relatively long cycle life.

A fourth aspect of this application provides an electronic device. The electronic device includes the electrochemical device according to the second or third aspect of this application. The electrochemical device according to this application exhibits a relatively long cycle life, so that the electronic device according to this application exhibits a relatively long service life.

This application provides a separator, an electrochemical device, and an electronic device. The separator contains nanoscale and sub-nanoscale pore structures. The separator includes a polymer layer and a porous material layer. The porous material layer includes a porous material. The porous material includes a metal-organic framework material, a covalent organic framework material, a molecular sieve material, or a microporous polymer. A pore channel diameter of the porous material is 0.1 nm to 10 nm. A thickness of the porous material layer is 1 µm to 8 µm. The separator according to this application contains micropores and sub-nanopores. When applied to an electrochemical device, the separator of this application can confine solvent molecules in the electrolyte solution to the pore channels of the separator while the electrolyte solution penetrates the separator. On the one hand, this reduces the possibility of contact between the electrolyte solution and the lithium metal, and reduces side reactions between the lithium metal and the electrolyte solution during cycling of the electrochemical device so as to improve the cycle performance of the electrochemical device. On the other hand, this increases the mobility of lithium ions and improves the electrochemical performance of the electrochemical device. In addition, by taking advantage of the micropores and sub-nanopores in the separator, this application can homogenize a lateral flow of lithium ions, increase the density and uniformity of lithium metal deposited on the surface of the negative electrode plate, slow down growth of lithium dendrites, and reduce the possibility of the lithium dendrites piercing the separator, thereby alleviating the short-circuit problem of the electrochemical device during cycling, and in turn, prolonging the cycle life of the electrochemical device. Definitely, a single product or method in which the technical solution of this application is implemented does not necessarily achieve all of the above advantages concurrently.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.
FIG. 1 is a schematic structural diagram of a porous material layer in a separator according to this application;
FIG. 2 is a schematic diagram of an internal structure of a porous material;
FIG. 3 is a schematic cross-sectional view of a separator sectioned along a thickness direction of the separator according to an embodiment of this application;
FIG. 4 is a schematic cross-sectional view of a separator sectioned along a thickness direction of the separator according to another embodiment of this application;
FIG. 5 is a schematic cross-sectional view of a separator sectioned along a thickness direction of the separator according to still another embodiment of this application;
FIG. 6A is a cross-sectional scanning electron microscopy (SEM) image of a separator sectioned along a thickness direction and prepared according to Embodiment 1-2 of this application;
FIG. 6B is a cross-sectional SEM image of a separator sectioned along a thickness direction and prepared according to Embodiment 1-2 of this application;
FIG. 7A is a cross-sectional SEM image of a negative electrode plate sectioned along a thickness direction after a lithium metal battery containing the negative electrode plate is cycled according to Embodiment 1-2 of this application;
FIG. 7B is a cross-sectional SEM image of a negative electrode plate sectioned along a thickness direction after a lithium metal battery containing the negative electrode plate is cycled according to Comparative Embodiment 1; and
FIG. 8 shows a change of a cycle capacity retention rate versus a number of cycles of lithium metal batteries prepared according to Embodiment 1-2 and Comparative Embodiment 1 of this application.

### DETAILED DESCRIPTION OF EMBODIMENTS

The following describes the technical solutions in some embodiments of this application clearly in detail with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in the specific embodiments of this application, this application is construed by using a lithium metal battery as an example of the electrochemical device, but the electrochemical device according to this application is not limited to the lithium metal battery.

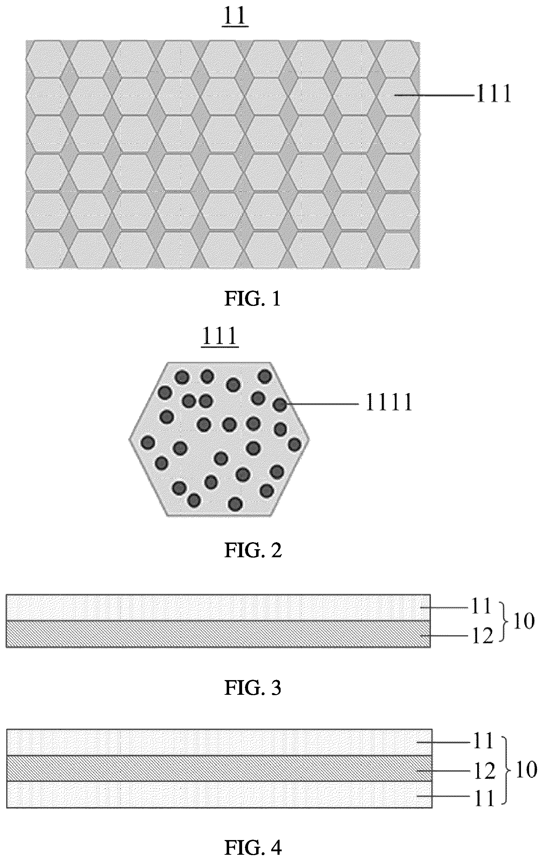

A first aspect of this application provides a separator. The separator contains nanoscale and sub-nanoscale pore structures. The separator includes a polymer layer and a porous material layer. As shown in FIG. 1 and FIG. 2, the porous material layer 11 includes a porous material 111. An ordered or disordered pore structure 1111 is included inside the porous material 111. The porous material includes a metal-organic framework material, a covalent organic framework material, a molecular sieve material, or a microporous polymer. A pore channel diameter of the porous material is 0.1 nm to 10 nm, preferably 0.1 nm to 5 nm, and further preferably 0.1 nm to 1 nm. A thickness of the porous material layer is 1 µm to 8 µm, and preferably 1 µm to 5 µm. For example, the pore channel diameter of the porous material may be 0.1 nm, 0.3 nm, 0.4 nm, 0.5 nm, 0.8 nm, 1 nm, 1.5 nm, 2 nm, 2.5 nm, 3 nm, 4 nm, 5 nm, 6 nm, 8 nm, 10 nm, or a value falling within a range formed by any two thereof. For example, the thickness of the porous material layer may be 1 µm, 2 µm, 4 µm, 5 µm, 6 µm, 8 µm, or a value falling within a range formed by any two thereof. The separator according to this application contains micropores and sub-nanopores. The pore structures of the micropores and sub-nanopores may be an ordered structure or a disordered structure, and preferably an ordered structure. In this application, a sub-nanopore means a pore of a diameter less than or equal to 1 nm, a micropore means a pore of a diameter less than or equal to 2 nm, and a nanopore means a pore of a diameter less than or equal to 100 nm.

By controlling the pore channel diameter of the porous material and the thickness of the porous material layer to fall within the above range, this application achieves a high degree of matching between the pore channel diameter of the porous material and the solvent molecules in the electrolyte solution, and causes the pore channel diameter of the porous material to be greater than or equal to the size of the solvent molecules, thereby making it convenient to confine the solvent molecules in the electrolyte solution to the pore channels of the porous material in the separator. By applying the separator of this application to an electrochemical device, the solvent molecules in the electrolyte solution can be confined within the pore channels of the separator while the electrolyte solution penetrates the separator. On the one hand, this reduces the possibility of contact between the electrolyte solution and the lithium metal, and reduces side reactions between the lithium metal and the electrolyte solution during cycling of the electrochemical device so as to improve the cycle performance of the electrochemical device. On the other hand, this increases the mobility of lithium ions and improves the electrochemical performance of the electrochemical device. In addition, by taking advantage of the micropores and sub-nanopores in the separator, this application can homogenize a lateral flow of lithium ions, increase the density and uniformity of lithium metal deposited on the surface of the negative electrode plate, slow down growth of lithium dendrites, and reduce the possibility of the lithium dendrites piercing the separator, thereby alleviating the short-circuit problem of the electrochemical device during cycling, and in turn, prolonging the cycle life of the electrochemical device.

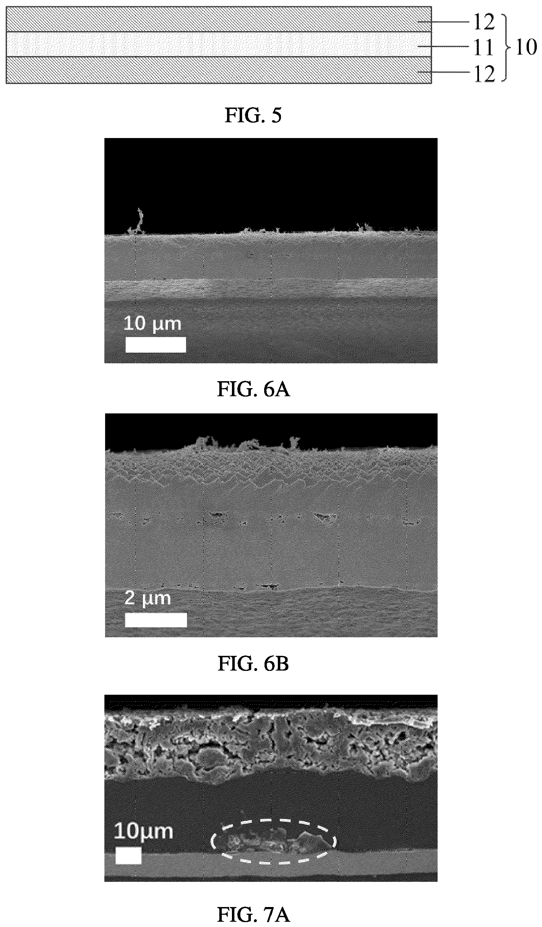

In some embodiments of this application, as shown in FIG. 3, the separator 10 includes a polymer layer 12 and a porous material layer 11 disposed on one surface of the polymer layer 12. In some other embodiments of this application, as shown in FIG. 4, the separator 10 includes a polymer layer 12 and a porous material layer 11 disposed on two surfaces of the polymer layer 12. In some other embodiments of this application, as shown in FIG. 5, the separator 10 includes a porous material layer 11 and a polymer layer 12 disposed on two surfaces of the porous material layer 11. The separator of the above structure is capable of confining solvent molecules in the electrolyte solution within the pore channels of the separator. On the one hand, this reduces the possibility of contact between the electrolyte solution and the lithium metal, and reduces side reactions between the lithium metal and the electrolyte solution during cycling of the electrochemical device so as to improve the cycle performance of the electrochemical device. On the other hand, this increases the mobility of lithium ions and improves the electrochemical performance of the electrochemical device. In addition, by taking advantage of the micropores and sub-nanopores in the separator, this application can homogenize a lateral flow of lithium ions, increase the density and uniformity of lithium metal deposited on the surface of the negative electrode plate, slow down growth of lithium dendrites, and reduce the possibility of the lithium dendrites piercing the separator, thereby alleviating the short-circuit problem of the electrochemical device during cycling, and in turn, prolonging the cycle life of the electrochemical device. Among the above three structures of the separator, a preferable structure of the separator is: a separator 10 including a polymer layer 12 and a porous material layer 11 disposed on one surface of the polymer layer 12. When the separator of this structure is applied to an electrochemical device, the electrochemical device can be endowed with good kinetic performance in addition to higher cycle performance, thereby further prolonging the cycle life of the electrochemical device.

In this application, the porous material layer may be disposed on one surface of the polymer layer in the thickness direction or on both surfaces of the polymer layer in the thickness direction. It is hereby noted that the "surface" herein may be the entire region of the polymer layer or a partial region of the polymer layer. Preferably, the porous material layer is disposed on the entire region of the surface of the polymer layer.

In some embodiments of this application, a porosity of the separator is 20% to 80%, and preferably 35% to 65%. For example, the porosity of the separator may be 20%, 35%, 40%, 50%, 65%, 70%, 80%, or a value falling within a range formed by any two thereof. By controlling the porosity of the separator to fall within the above range, the separator is more capable of confining the electrolyte solution within the specified region, and the side reactions between the lithium metal and the electrolyte solution are reduced during the cycling of the electrochemical device. In addition, the separator can homogenize a lateral flow of lithium ions, increase the density and uniformity of lithium metal deposited on the surface of the negative electrode plate, slow down growth of lithium dendrites, and reduce the possibility of the lithium dendrites piercing the separator, thereby alleviating the short-circuit problem of the electrochemical device during cycling, improving the cycle performance of the electrochemical device, and in turn, prolonging the cycle life of the electrochemical device.

In some embodiments of this application, the metal-organic framework material includes at least one of MOF-69C, MOF-74, MOF-5, ZIF-67, ZIF-8, MIL-100(Cr), MIL-100(Fe), UIO-66, PCN61, or CuBTC; the covalent organic framework material includes at least one of COF-1, COF-5, COF-012, COF-103, COF-105, CTF-1, or JUC-505; the molecular sieve material includes at least one of MCM-41, SAPO-34, 3A molecular sieve (2/3K2O·1/3Na2O·Al2O3·2SiO2·9/2H2O), 4A molecular sieve (Na2O·Al2O3·2SiO2·9/2H2O), 5A molecular sieve (3/4CaO·1/4Na2O·Al2O3·2SiO2·9/2H2O), or 13X molecular sieve (Na2O·AL2O3·2.45SiO2·6H2O); and, the microporous polymer includes PIM-1 (CAS number: CB75820567). Selecting the metal-organic framework material, covalent organic framework material, molecular sieve material, or microporous polymer falling within the above ranges endows the separator with good mechanical properties and high electrolyte absorptivity, and makes it more convenient to confine the electrolyte solution within the pore channels of the porous material. The separator reduces side reactions between the lithium metal and the electrolyte solution during cycling of the electrochemical device so as to improve the cycle performance of the electrochemical device. In addition, the separator can homogenize a lateral flow of lithium ions, increase the density and uniformity of lithium metal deposited on the surface of the negative electrode plate, slow down growth of lithium dendrites, and reduce the possibility of the lithium dendrites piercing the separator, thereby alleviating the short-circuit problem of the electrochemical device during cycling, and in turn, prolonging the cycle life of the electrochemical device.

In some embodiments of this application, a particle diameter of the porous material is 50 nm to 1000 nm, and preferably 50 nm to 800 nm. For example, the particle diameter of the porous material may be 50 nm, 100 nm, 200 nm, 300 nm, 400 nm, 500 nm, 700 nm, 800 nm, 1000 nm, or a value falling within a range formed by any two thereof. By controlling the particle diameter of the porous material to fall within the above range, it is convenient to obtain a separator that is homogeneous in thickness, dense, and flat, and the separator is more capable of confining the electrolyte solution within a specified region, thereby improving the cycle performance of the electrochemical device, alleviating the short-circuit problem of the electrochemical device during cycling, and prolonging the cycle life of the electrochemical device. In this application, the particle diameter or particle size of the porous material means D₅₀. D₅₀ is a particle diameter value at which a cumulative volume percentage of the material reaches 50% in a volume-based particle size distribution curve viewed from a small-diameter side. In this application, the selection of the particle diameter of the porous material is limited by the thickness of the porous material layer. The particle diameter of the porous material is less than or equal to one-half of the thickness of the porous material layer.

In some embodiments of this application, a specific surface area of the porous material is 200 m²/g to 2000 m²/g. For example, the specific surface area of the porous material may be 200 m²/g, 400 m²/g, 800 m²/g, 1000 m²/g, 1200 m²/g, 1400 m²/g, 1600 m²/g, 1800 m²/g, 2000 m²/g, or a value falling within a range formed by any two thereof. By controlling the specific surface area of the porous material to fall within the above range, it is convenient to obtain a separator that is homogeneous in thickness, dense, and flat, and the separator is more capable of confining the electrolyte solution within a specified region, thereby improving the cycle performance of the electrochemical device, alleviating the short-circuit problem of the electrochemical device during cycling, and prolonging the cycle life of the electrochemical device.

In some embodiments of this application, a pore diameter of a pore structure of the polymer layer is 10 nm to 200 nm, and preferably 20 nm to 80 nm. For example, the pore diameter of the pore structure of the polymer layer may be 10 nm, 20 nm, 50 nm, 70 nm, 80 nm, 100 nm, 130 nm, 150 nm, 180 nm, 200 nm, or a value falling within a range formed by any two thereof. By controlling the pore diameter of the pore structure of the polymer layer to fall within the above range, the separator is endowed with high electrolyte absorptivity, good mechanical properties, and high uniformity of ion transfer. The separator is more capable of confining the electrolyte solution within a specified region, thereby improving the cycle performance of the electrochemical device, alleviating the short-circuit problem of the electrochemical device during cycling, and prolonging the cycle life of the electrochemical device.

In some embodiments of this application, a thickness of the polymer layer is 3 µm to 30 µm, and preferably 5 µm to 16 µm. For example, the thickness of the polymer layer may be 3 µm, 5 µm, 10 µm, 15 µm, 16 µm, 20 µm, 25 µm, 30 µm, or a value falling within a range formed by any two thereof. By controlling the thickness of the polymer layer to fall within the above range, the separator is more capable of confining the electrolyte solution within the specified region. When applied to an electrochemical device, the separator can improve the cycle performance and kinetic performance of the electrochemical device, alleviate the short-circuit problem of the electrochemical device during cycling, and prolong the cycle life of the electrochemical device without compromising the energy density.

In some embodiments of this application, a material of the polymer layer includes at least one of polyethylene, polypropylene, polyvinylidene difluoride, polyimide, polyamide, polyacrylonitrile, polyethylene glycol, polyphenylene ether, polypropylene carbonate, polymethyl methacrylate, polyethylene terephthalate, polyethylene oxide, polyvinylidene difluoride-hexafluoropropylene, or polyvinylidene difluoride-chlorotrifluoroethylene. Selecting the polymer layer material falling within the above range endows the separator with high uniformity of ion transfer, high stability, and good mechanical properties, and makes it more convenient to confine the electrolyte solution within the pore channels of the porous material. When applied to an electrochemical device, the separator can reduce the side reactions between the lithium metal and the electrolyte solution during the cycling of the electrochemical device, and improve the cycle performance of the electrochemical device. In addition, the separator can homogenize a lateral flow of lithium ions, increase the density and uniformity of lithium metal deposited on the surface of the negative electrode plate, slow down growth of lithium dendrites, and reduce the possibility of the lithium dendrites piercing the separator, thereby alleviating the short-circuit problem of the electrochemical device during cycling, and prolonging the cycle life of the electrochemical device.

In this application, the features in the above embodiment, for example, the particle diameter of the porous material, the specific surface area of the porous material, the pore diameter of the pore structure of the polymer layer, the thickness of the polymer layer, the type of material of the polymer layer, can be combined arbitrarily, and the separator fulfills at least one of the above features.

In some embodiments of this application, a pore channel diameter of the separator is 10 nm to 150 nm, and preferably 30 nm to 80 nm. For example, the pore channel diameter of the separator may be 20 nm, 30 nm, 50 nm, 80 nm, 90 nm, 100 nm, 120 nm, 130 nm, 150 nm, or a value falling within a range formed by any two thereof. By controlling the particle channel diameter of the separator to fall within the above range, the separator is more capable of confining the electrolyte solution within a specified region, thereby improving the cycle performance of the electrochemical device, alleviating the short-circuit problem of the electrochemical device during cycling, and prolonging the cycle life of the electrochemical device. In this application, the pore channel diameter of the separator means an average pore channel diameter of the separator as a whole. The pore channels of the separator include the pore structure of the polymer layer and the internal pore channel of the porous material layer.

In some embodiments of this application, charged polymers or metal ions are included inside a pore channel of the separator. The charged polymers include at least one of sodium polystyrene sulfonate (PSS), poly N-2-(dimethylaminopropyl)methacrylamide (PDMAPMA), or polyacrylic acid (PAA). The metal ions include at least one of Cu²⁺, Zn²⁺, or Co³⁺. The charged polymers or metal ions falling within the above range modify the interior of the pore channels of the porous material, thereby further improving the adsorptivity of the porous material for anions, increasing the mobility of lithium ions to slow down the growth of lithium dendrites, and further alleviating the short-circuit problem of the electrochemical device during cycling so as to prolong the cycle life of the electrochemical device. The anions include an anion ionized from the lithium salt in the electrolyte solution, for example, but not limited to, a bis(trifluoromethanesulfonyl)imide anion (TFSI-).

The method for introducing the charged polymers or metal ions into the pore channels of the separator is not particularly limited herein, as long as the objectives of this application can be achieved. For example, a porous material with pore channels modified with charged polymers or the metal ions may be obtained by adding the powder of the porous material into a solution containing the charged polymers or a solution containing the metal ions and then stirring and reacting the solution. The solution containing the charged polymers may be an ethanol solution of PSS. The solution containing the metal ions may be an aqueous copper sulfate solution or an aqueous copper chloride solution. The weight-average molecular weight of the charged polymers is not particularly limited herein, as long as the objectives of this application can be achieved. For example, the weight-average molecular weight of the charged polymers may be 100000 to 200000.

In this application, the features in the above embodiment, for example, the pore channel diameter of the separator, the charged polymers or metal ions included inside the pore channels of the separator, and the type of the charged polymers or the type of the metal ions, may be combined arbitrarily. The separator fulfills at least one of the above features.

In this application, the electrical conductivity of the separator is less than or equal to 10⁻¹⁰ S/cm, indicating that the separator of this application is highly insulative, thereby suppressing short circuits and improving safety performance of the electrochemical device.

In this application, the porous material layer may further include a binder. The binder may include, but is not limited to, at least one of polyvinylidene difluoride (PVDF), polytetrafluoroethylene (PTFE), polyacrylate ester, polyimide, polyamide, polyamideimide, polyvinyl alcohol, polyacrylonitrile, poly(styrene-co-butadiene), sodium alginate, sodium carboxymethyl cellulose, potassium carboxymethyl cellulose, sodium hydroxymethyl cellulose, or potassium hydroxymethyl cellulose. The weight-average molecular weight of the binder is not particularly limited herein, and may be selected according to conventional settings, as long as the objectives of this application can be achieved. For example, the weight-average molecular weight of the binder may be 150000 to 1000000. The mass ratio between the porous material and the binder is not particularly limited herein, as long as the objectives of this application can be achieved. For example, the mass ratio between the porous material and the binder may be 7: 1 to 11: 1.

The porous material of this application is a commercially available conventional substance. The porous materials of different models may be purchased to obtain porous materials that vary in pore channel diameter, particle diameter, or specific surface area. The source of the material is not particularly limited herein, as long as the objectives of this application can be achieved. The polymer layer of this application may be made of a commercially available PP film, PE film, or the like. Films of different models may be purchased and used as the polymer layer, so as to obtain the polymer layers of different materials, different thicknesses, and different pore sizes. The source of the material is not particularly limited herein, as long as the objectives of this application can be achieved.

The method for preparing a separator is not particularly limited herein, as long as the objectives of this application can be achieved. The separator may be prepared by a multilayer film preparation method commonly used in this field. An exemplary preparation method is: using a commonly used PE film or PP film as a polymer layer, and preparing a porous material layer on the surface of the polymer layer by processes such as cold-pressing, hot-pressing, scrape-coating, spin-coating, and electrospinning, so as to produce a separator of this application. The method for preparing a separator may include, but is not limited to, any one of the following methods (1) to (4): (1) Heating the polymer layer to 110 °C to 120 °C, uniformly dispersing the porous material on the surface of the polymer layer, pressing and molding the polymer layer at 110 °C to 120 °C with a pressure of 1 MPa to 5 MPa, and then cooling the polymer layer to a room temperature to obtain a separator. In the above method (1), when the polymer layer is heated to 110 °C to 120 °C, the polymer layer is not yet softened, and the porous material can form a porous material layer on the surface of the polymer layer under pressure, so as to obtain a separator containing the porous material layer and the polymer layer. The thickness of the porous material layer is typically adjusted by changing the dosage of the porous material. (2) Dissolving the porous material and a binder in a solvent, stirring well to obtain a slurry, coating one surface of the polymer layer with the slurry by means of a spatula, and drying the coated separator to obtain a finished separator. (3) Dissolving the porous material and the binder in a solvent, stirring well to obtain a slurry, coating one surface of the polymer layer with the slurry by means of a spatula, drying the separator coated with the porous material layer on a single side, and repeating the foregoing steps on the other surface of the polymer layer to obtain a separator coated with the porous material layer on both sides. (4) Dissolving the porous material and the binder in a solvent, stirring well to obtain a slurry, coating one surface of the polymer layer with the slurry by means of a spatula, overlaying a surface of the undried porous material layer with another polymer layer upon completion of the coating, and then pressing the two layers at 70 °C to 90 °C with a pressure of 1 MPa to 5MPa to mold and obtain a separator. In the above preparation methods (2) to (4), the mass ratio between the porous material and the binder may be 7: 1 to 11: 1, the solvent may include, but is not limited to, N-methyl-pyrrolidone, and the solid content of the slurry may be 25 wt% to 80 wt%.

Normally, the pore channel diameter of the separator can be adjusted by changing the roll pressure. By increasing the roll pressure, the pore channel diameter of the separator can be reduced. By reducing the roll pressure, the pore channel diameter of the separator can be increased. The porosity of the separator can be adjusted by changing the mass of the roller used in the high-pressure calendering. By increasing the mass of the roller, the porosity of the separator can be reduced. By reducing the mass of the roller, the porosity of the separator can be increased. The thickness of the porous material layer can be adjusted by changing the size of the spatula. With a larger-sized spatula, the porous material layer is thicker; and, with a smaller-sized spatula, the porous material layer is thinner. Specifically, the porous material layer of 3 µm in thickness can be formed by using a 15 µm spatula, the porous material layer of 2 µm in thickness can be formed by using a 10 µm spatula, and the porous material layer of 1 µm in thickness can be formed by using a 5 µm spatula.

A second aspect of this application provides an electrochemical device. The electrochemical device includes an electrode assembly. The electrode assembly includes a positive electrode plate, a negative electrode plate, and the separator according to the first aspect of this application. The separator according to this application can confine the electrolyte solution within the pore channels of the porous material, thereby improving the cycle performance of the electrochemical device, alleviate the short-circuit problem of the electrochemical device during cycling, and prolong the cycle life of the electrochemical device. Therefore, the electrochemical device according to this application possesses a relatively long cycle life.

A third aspect of this application provides an electrochemical device. The electrochemical device includes an electrode assembly. The electrode assembly includes a positive electrode plate, a negative electrode plate, and the separator according to the first aspect of this application. The separator includes a polymer layer and a porous material layer disposed on one surface of the polymer layer. A side, coated with the porous material layer, of the separator is oriented toward the negative electrode plate. The electrochemical device with the above features can reduce the possibility of contact between the electrolyte solution and the negative electrode plate, and reduce the side reactions between the lithium metal and the electrolyte solution during the cycling of the electrochemical device, so that the electrochemical device exhibits good cycle performance and a relatively long cycle life.

In this application, the positive electrode plate is not particularly limited, as long as the objectives of this application can be achieved. For example, the positive electrode plate includes a positive current collector and a positive active material layer disposed on at least one surface of the positive current collector. The positive current collector is not particularly limited in this application, as long as the objectives of this application can be achieved. For example, the positive current collector may include aluminum foil, aluminum alloy foil, a composite current collector (such as an aluminum carbon composite current collector), or the like. The thickness of the positive current collector is not particularly limited in this application, as long as the objectives of this application can be achieved. For example, the thickness of the positive current collector is 5 µm to 20 µm. In this application, the positive active material layer includes a positive active material. The type of the positive active material is not particularly limited herein, as long as the objectives of this application can be achieved. For example, the positive active material may include at least one of lithium nickel cobalt manganese (NCM) oxide, lithium nickel cobalt aluminum oxide, lithium iron phosphate (LiFePOa), a lithium-rich manganese-based material, lithium cobalt oxide, lithium manganese oxide, lithium manganese iron phosphate, or the like. The type of the NCM is not particularly limited in this application, as long as the objectives of this application can be achieved. For example, the NCM may include at least one of NCM 811, NCM 622, NCM 523, or NCM 111. In this application, the positive active material may further include a non-metal element. For example, the non-metal element includes at least one of fluorine, phosphorus, boron, chlorine, or the like. The thickness of the positive active material layer is not particularly limited herein, as long as the objectives of this application can be achieved. For example, the thickness of the positive active material layer on a single side of the current collector is 30 µm to 120 µm. In this application, the positive active material layer may be disposed on one surface of the positive current collector in a thickness direction or on both surfaces of the positive current collector in the thickness direction. It is hereby noted that the "surface" here may be the entire region of the surface of the positive current collector, or a partial region of the surface of the positive current collector, without being particularly limited herein, as long as the objectives of the application can be achieved. The positive active material layer of this application may further include a positive conductive agent and a positive electrode binder. The positive conductive agent and the positive electrode binder are not particularly limited herein, as long as the objectives of this application can be achieved. For example, the positive conductive agent may include, but is not limited to, at least one of conductive carbon black (Super P), carbon nanotubes (CNTs), carbon fibers, graphene, a metal material, or a conductive polymer. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. The positive electrode binder may include, but is not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene difluoride, polyethylene, polypropylene, polyacrylic acid, styrene-butadiene rubber, acrylated (or acrylate-esterified) styrene-butadiene rubber, epoxy resin, or nylon.

In this application, the negative electrode plate is not particularly limited, as long as the objectives of this application can be achieved. For example, the negative electrode plate may include a lithium-copper composite strip. The thickness of the lithium-copper composite strip is not particularly limited herein, as long as the objectives of this application can be achieved. For example, the thickness of the lithium-copper composite strip may be 30 µm to 80 µm. The negative electrode plate may further include a negative current collector and a negative active material layer disposed on at least one surface of the negative current collector. The negative current collector is not particularly limited in this application, as long as the objectives of this application can be achieved. For example, the negative current collector may be copper foil, copper alloy foil, nickel foil, stainless steel foil, titanium foil, foamed nickel, foamed copper, a composite current collector (such as a carbon copper composite current collector, a nickel copper composite current collector, or a titanium copper composite current collector), or the like. The thickness of the negative current collector is not particularly limited in this application, as long as the objectives of this application can be achieved.

For example, the thickness of the negative current collector is 4 µm to 20 µm. In this application, the negative active material layer includes a negative active material. The negative active material is not particularly limited herein, as long as the objectives of this application can be achieved. For example, the negative active material may include, but is not limited to, at least one of graphite, mesocarbon microbeads (MCMB), hard carbon, soft carbon, Li-Sn alloy, Li-Sn-O alloy, Sn, SnO, SnO₂, spinel-structured lithium titanium oxide Li₄Ti₅O₁₂, Li-Al alloy, or metallic lithium. The thickness of the negative active material layer is not particularly limited herein, as long as the objectives of this application can be achieved. For example, the thickness of the negative active material layer on a single side of the current collector is 30 µm to 130 µm. In this application, the negative active material layer may be disposed on one surface of the negative current collector in the thickness direction or on both surfaces of the negative current collector in the thickness direction. It is hereby noted that the "surface" here may be the entire region of the negative current collector, or a partial region of the negative current collector, without being particularly limited in this application, as long as the objectives of the application can be achieved. The negative active material layer of this application may further include a negative conductive agent and a negative electrode binder. The negative conductive agent and the negative electrode binder are not particularly limited herein, as long as the objectives of this application can be achieved. For example, the negative conductive agent may be the same as the positive conductive agent described above, and the negative electrode binder may be the same as the positive electrode binder described above.

The electrochemical device according to this application further includes an electrolyte solution. The electrolyte solution includes a lithium salt and a nonaqueous solvent. The lithium salt may include at least one of LiPF₆, LiBF₄, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), lithium bis(trifluoromethanesulfonyl)imide (LiTFSI), or lithium difluoroborate. The nonaqueous solvent is not particularly limited in this application, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate, diethyl carbonate, dipropyl carbonate, methyl propyl carbonate, ethylene propyl carbonate, or ethyl methyl carbonate. The cyclic carbonate compound may include, but is not limited to, at least one of ethylene carbonate, propylene carbonate (PC), butylene carbonate, or vinyl ethylene carbonate. The fluorocarbonate compound may include, but is not limited to, at least one of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include, but is not limited to, at least one of dimethyl ether, dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The electrochemical device of this application further includes a pocket. The pocket is configured to accommodate a positive electrode plate, a separator, a negative electrode plate, an electrolyte solution, and other components known in the art for use in an electrochemical device. Such other components are not limited herein. The pocket is not particularly limited herein, and may be a pocket well-known in the art, as long as the objectives of this application can be achieved.

The electrochemical device in this application is not particularly limited, and may be any device in which an electrochemical reaction occurs. In an embodiment of this application, the electrochemical device may be, but is not limited to, a lithium-ion secondary battery (lithium-ion battery), a lithium metal secondary battery (lithium metal battery), a sodium-ion secondary battery (sodium-ion battery), a sodium metal secondary battery (sodium metal battery), a lithium polymer secondary battery, a lithium-ion polymer secondary battery, or the like. The shape of the electrochemical device is not particularly limited herein, as long as the objectives of this application can be achieved. For example, the electrochemical devices may include, but are not limited to, a cylindrical battery, a prismatic battery, a special-shaped battery, and a button battery.

The process of preparing an electrochemical device is well-known to a person skilled in the art, and is not particularly limited herein. For example, the preparation process may include, but is not limited to, the following steps: stacking a positive electrode plate, a separator, and a negative electrode plate in sequence, and then fixing four corners of the entire stacked structure by using adhesive tape, so as to obtain a stacked-type electrode assembly, putting the electrode assembly into a pocket, injecting an electrolyte solution into the pocket, and sealing the pocket to obtain an electrochemical device; or, stacking a positive electrode plate, a separator, and a negative electrode plate in sequence, and then performing operations such as winding and folding as required for the stacked structure, so as to obtain a jelly-roll electrode assembly, putting the electrode assembly into a pocket, injecting the electrolyte solution into the pocket, and sealing the pocket to obtain an electrochemical device. In addition, an overcurrent prevention element, a guide plate, and the like may be placed into the package as required, so as to prevent the rise of internal pressure, overcharge, and overdischarge of the electrochemical device.

A fourth aspect of this application provides an electronic device. The electronic device includes the electrochemical device according to the second or third aspect of this application. The electrochemical device according to this application exhibits a relatively long cycle life, so that the electronic device according to this application exhibits a relatively long service life.

The electronic device is not particularly limited herein, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

### Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test Methods and Test Devices

### Scanning electron microscope (SEM) test

Observing, by using a scanning electron microscope, the morphology of a cross-section of a separator sectioned along a thickness direction, and capturing a SEM image. Determining the pore channel diameter and the porosity of the separator Determining the pore channel diameter and the porosity of the separator with reference to the national standard GB/T 21650.1-2008 *Pore Size Distribution and Porosity of Solid Materials by Mercury Porosimetry and Gas Adsorption.*

### Testing the cycle capacity retention rate

Leaving a lithium metal battery to stand in a 25 °C±2 °C thermostat for 2 hours, and performing a cycling process 1: charging the lithium metal battery at a constant current of 0.2 C until the voltage reaches 3.7 V, and then charging the battery at a constant voltage of 3.7 V until the current drops to 0.025 C, and leaving the battery to stand for 5 minutes; and then discharging the battery at a constant current of 0.5 C until the voltage drops to 2.8 V, thereby completing one charge-and-discharge cycle. Recording a discharge capacity of the lithium metal battery in the first cycle. Subsequently, iterating the operations in the cycling process 1 for a specified number of cycles. Performing a cycling process 2 to complete one charge-discharge cycle when the iteration proceeds to the 50^{th} cycle, 100^{th} cycle, 150^{th} cycle, 200^{th} cycle, 250^{th} cycle separately. The cycling process 2 is: charging the lithium metal battery at a constant current of 0.05 C until the voltage reaches 3.7 V, and then charging the battery at a constant voltage of 3.7 V until the current drops to 0.025 C, and leaving the battery to stand for 5 minutes; and then discharging the battery at a constant current of 0.1 C until the voltage drops to 2.8 V, thereby completing one charge-and-discharge cycle. Recording the discharge capacity at the end of each cycle. Testing the lithium metal batteries in groups, where each group includes 10 lithium metal batteries. Calculating an average value of a capacity retention rate of the 10 lithium metal batteries.

Cycle capacity retention rate of a lithium metal battery = (discharge capacity at the end of each cycle in mAh/discharge capacity at the end of the first cycle in mAh) × 100%.

### Testing the number of cycles

Leaving a lithium metal battery to stand in a 25 °C±2 °C thermostat for 2 hours, and then performing the following cycling process: charging the battery at a constant current of 0.2 C until the voltage reaches 3.7 V, and then charging the battery at a constant voltage of 3.7 V until the current drops to 0.025 C, and leaving the battery to stand for 5 minutes; subsequently, discharging the battery at a constant current of 0.2 C until the voltage reaches 2.8 V, thereby completing one charge-and-discharge cycle. Recording a discharge capacity of the lithium metal battery in the first cycle. Subsequently, keeping repeating the above cycling process, and recording the number of cycles when the capacity of the lithium metal battery fades to 80% of the first-cycle discharge capacity. Testing the lithium metal batteries in groups, where each group includes 10 lithium metal batteries. Calculating an average value of the numbers of cycles recorded when the capacity of the lithium metal battery fades to 80% of the first-cycle discharge capacity.

### Testing the Coulombic efficiency

Charging a lithium metal battery at 20 °C at a constant current rate of 0.2 C until a voltage of 3.7 V by using an electrochemical workstation, and then charging the battery at a constant voltage until the current drops to 0.025 C, leaving the battery to stand for 5 minutes, and then discharging the battery at a constant current of 0.2 C until the voltage reaches 2.8 V; leaving the battery to stand for 5 minutes, thereby completing one cycle. Subsequently, keeping repeating the above charge-discharge cycling process. The Coulombic efficiency is an average value of the ratios of the discharge capacity to the charge capacity in each cycle when the capacity of the lithium metal battery fades to 80% of the first-cycle discharge capacity.

### Observing the lithium metal deposition morphology

Disassembling a lithium metal battery that has just finished the above testing of the number of cycles. Taking out a negative electrode plate, observing the lithium metal deposition morphology on the surface of the negative electrode plate by using a scanning electron microscope, and taking SEM images.

### Embodiment 1-1

### <Preparing a negative electrode plate>

Using a 50 µm-thick lithium-copper composite strip (manufactured by Tianjin China Energy Lithium Co., Ltd.) as a negative electrode plate, and die-cutting the lithium-copper composite strip directly into pieces of 18 mm in diameter for further use.

### <Preparing a positive electrode plate>

Mixing LiFePO₄ as a positive active material, conductive carbon black as a conductive agent, and PVDF as a binder at a mass ratio of 97.5: 1: 1.5, adding N-methyl-pyrrolidone (NMP) as a solvent, and stirring well to formulate a positive electrode slurry in which the solid content is 75 wt%. Coating one surface of a 13 µm-thick positive current collector aluminum foil with the positive electrode slurry evenly, and drying the slurry at 90 °C to obtain a positive electrode plate coated with an 80 µm-thick positive active material layer on a single side. Cutting, after completion of the coating, the electrode plate into pieces of 14 mm in diameter for further use.

### <Preparing an electrolyte solution>

Mixing dioxolane (DOL) and dimethyl ether (DME) at a volume ratio of 1: 1 in a dry argon atmosphere glovebox to obtain an organic solvent, and then adding lithium bis(trifluoromethanesulfonyl)imide (LiTFSI) as a lithium salt into the organic solvent, and letting the lithium salt be dissolved and mixed evenly to obtain an electrolyte solution in which the lithium salt concentration is 1 mol/L.

### <Preparing a separator>

Using a 7 µm-thick PE film (manufactured by Entek) as a polymer layer, heating the polymer layer to 110 °C, dispersing 2 grams of CuBTC evenly on the surface of the polymer layer, and then pressing the polymer layer at 110 °C with a pressure of 1 MPa to mold a separator. Cooling the separator down to a room temperature, and then taking out the separator, and labeling the separator as PE-CuBTC. Finally, cutting the separator into pieces of 22 mm in diameter for further use.

### <Preparing a button battery>

Stacking a negative electrode case, the negative electrode plate, the separator, the positive electrode plate, and a positive electrode case sequentially in bottom-up order in a dry argon atmosphere glovebox. Letting a side, coated with a porous material layer, of the separator be oriented toward the negative electrode plate. Subsequently, adding 70 µL of the electrolyte solution prepared above in <Preparing an electrolyte solution>. Sealing the above components by using a sealing machine, so as to obtain a button battery, that is, a lithium metal battery.

### Embodiment 1-2

Identical to Embodiment 1-1 except that the separator is prepared by a method described in <Preparing a separator> below.

### <Preparing a separator>

Using a 7 µm-thick PE film (manufactured by Entek) as a polymer layer, dissolving 1 gram of CuBTC and 0.15 gram of PVDF in 6.45 grams of NMP, and stirring well to obtain a porous material layer slurry. Applying the slurry onto one surface of the polymer layer by using a 10 µm spatula, and naturally drying the coated separator at normal temperature for 6 hours, and then drying the separator in an 80 °C oven for 12 hours to obtain a separator of a structure formed of the polymer layer and the porous material layer. Labeling the separator as PE+CuBTC-1. Cutting the separator into pieces of 22 mm in diameter for further use.

### Embodiments 1-3 to 1-7

Identical to Embodiment 1-2 except that the type of the porous material is adjusted according to Table 1. The separators obtained in Embodiments 1-3 to 1-7 are labeled as PE+ZIF8, PE+SAPO-34, PE+PIM1, PE+MCM41, and PE+COF-1, respectively.

### Embodiments 1-8 to 1-9

Identical to Embodiment 1-2 except that the roll pressure is adjusted to make the pore channel diameters of the separators be the values shown in Table 1. The separators obtained in Embodiments 1-8 to 1-9 are labeled as PE+CuBTC-2 and PE+CuBTC-3, respectively.

### Embodiments 1-10 to 1-12

Identical to Embodiment 1-2 except that the thickness of the polymer layer is adjusted according to Table 1. The separators obtained in Embodiments 1-10 to 1-12 are labeled as PE+CuBTC-4, PE+CuBTC-5, and PE+CuBTC-6, respectively.

### Embodiments 1-13 to 1-14

Identical to Embodiment 1-2 except that the size of the spatula is changed to make the thickness of the porous material layer be the value shown in Table 1. The separators obtained in Embodiments 1-13 to 1-14 are labeled as PE+CuBTC-7 and PE+CuBTC-8, respectively.

### Embodiments 1-15 to 1-16

Identical to Embodiment 1-2 except that high-pressure calendering is applied and the mass of the roller used in the high-pressure calendering is adjusted to make the porosity of the separator be the values shown in Table 1. The separators obtained in Embodiments 1-15 to 1-16 are labeled as PE+CuBTC-9 and PE+CuBTC-10, respectively.

### Embodiment 1-17

Identical to Embodiment 1-2 except that the separator is a 7 µm-thick PP film (manufactured by Entek) (the separator is labeled as PP+CuBTC).

### Embodiment 1-18

Identical to Embodiment 1-2 except that the separator is prepared by a method described in <Preparing a separator> below.

### <Preparing a separator>

Dissolving 24 mg of sodium polystyrene sulfonate (PSS, with a weight-average molecular weight Mw = 150000) in 600 mL of ethanol water solution (the volume ratio between ethanol and water is 1: 1), and then adding 2 grams of CuBTC powder. Stirring the solution for 24 hours at room temperature, and then suction-filtering the solution to separate the solid from the liquid. Subsequently, vacuum-drying the solid at 100 °C for 12 hours, and grinding the solid to obtain a CuBTC powder for modifying the PSS inside the pore channels, labeled as CuBTC@PSS powder.

Using a 7 µm-thick PE film (manufactured by Entek) as a polymer layer, dissolving 1 gram of CuBTC@PSS and 0.15 gram of PVDF in 6.45 grams of NMP, and stirring well to obtain a porous material layer slurry. Applying the slurry onto one surface of the polymer layer by using a 10 µm spatula, and naturally drying the coated separator at normal temperature for 6 hours, and then drying the separator in an 80 °C oven for 12 hours to obtain a separator, labeled as PE+CuBTC@PSS. Cutting the separator into pieces of 22 mm in diameter for further use.

### Embodiment 1-19

Identical to Embodiment 1-2 except that the separator is prepared by a method described in <Preparing a separator> below.

### <Preparing a separator>

Adding 2 grams of CuBTC powder into an ethanol solution in which the copper sulfate concentration is 5 wt%, stirring the solution at room temperature for 48 hours. Suction-filtering the solution to separate the solid from the liquid, and then vacuum-drying the solid at 80 °C for 24 hours, and then grinding the solid to obtain a CuBTC powder for modifying Cu²⁺ inside the pore channels, where the powder is labeled as CuBTC@Cu. Using a 7 µm-thick PE film (manufactured by Entek) as a polymer layer, dissolving 1 gram of CuBTC@Cu and 0.15 gram of PVDF in 6.45 grams of NMP, and stirring well to obtain a porous material layer slurry. Applying the slurry onto one surface of the polymer layer by using a 10 µm spatula, and naturally drying the coated separator at normal temperature for 6 hours, and then drying the separator in an 80 °C oven for 12 hours to obtain a separator, labeled as PE+CuBTC@Cu. Cutting the separator into pieces of 22 mm in diameter for further use.

### Embodiment 2-1

Identical to Embodiment 1-2 except that the separator is prepared by a method described in <Preparing a separator> below and the button battery is assembled by a method described in <Preparing a button battery> below.

### <Preparing a separator>

Using a 7 µm-thick PE film (manufactured by Entek) as a first polymer layer, dissolving 1 gram of CuBTC and 0.15 gram of PVDF in 6.45 grams of NMP, and stirring well to obtain a porous material layer slurry. Applying the first porous material layer onto one surface of the polymer layer by using a 5 µm spatula, and naturally drying the coated separator at normal temperature for 6 hours, and then drying the separator in an 80 °C oven for 12 hours. Subsequently, repeating the above steps to apply a second porous material layer onto the other surface of the polymer layer, and drying the coated separator to obtain a separator of a structure formed of the first porous material layer, the polymer layer, and the second the porous material layer. Labeling the separator as CuBTC+PE+CuBTC-1. Cutting the separator into pieces of 22 mm in diameter for further use.

### <Preparing a button battery>

Stacking a negative electrode case, the negative electrode plate, the separator, the positive electrode plate, and a positive electrode case sequentially in bottom-up order in a dry argon atmosphere glovebox. Subsequently, adding 70 µL of the electrolyte solution prepared above in <Preparing an electrolyte solution>. Sealing the above components by using a sealing machine, so as to obtain a button battery, that is, a lithium metal battery.

### Embodiment 2-2

Identical to Embodiment 2-1 except that the thickness of the porous material layer is adjusted according to Table 1. The separator obtained in Embodiment 2-2 is labeled as CuBTC+PE+CuBTC-2.

### Embodiment 2-3

Identical to Embodiment 2-1 except that the separator is prepared by a method described in <Preparing a separator> below.

### <Preparing a separator>

Using a 7 µm-thick PE film (manufactured by Entek) as a first polymer layer, dissolving 1 gram of CuBTC and 0.15 gram of PVDF in 6.45 grams of NMP, and stirring well to obtain a porous material layer slurry. Applying the first porous material layer onto one surface of the polymer layer by using a 10 µm spatula, and naturally drying the coated separator at normal temperature for 6 hours, and then drying the separator in an 80 °C oven for 12 hours. Subsequently, applying a second porous material layer onto the other surface of the polymer layer by using a 5 µm spatula, naturally drying the coated separator at normal temperature for 6 hours, and then drying the separator into an 80 °C oven for 12 hours to obtain a separator labeled as CuBTC+PE+CuBTC-3. Cutting the separator into pieces of 22 mm in diameter for further use.

### Embodiment 2-4

Identical to Embodiment 2-1 except that the separator is prepared by a method described in <Preparing a separator> below.

### <Preparing a separator>

Using a 7 µm-thick PE film (manufactured by Entek) as a polymer layer, dissolving 1 gram of CuBTC and 0.15 gram of PVDF in 6.45 grams of NMP, and stirring well to obtain a porous material layer slurry. Applying a first porous material layer onto one surface of the polymer layer by using a 5 µm spatula, and leaving the layers to stand for 10 minutes after completion of coating. Overlaying the undried first porous material layer with a 7 µm-thick PE film used as a second polymer layer. Pressing the layers at 80 °C with a pressure of 1 MPa to form a separator of a structure formed of the first polymer layer, the porous material layer, and the second polymer layer. Labeling the separator as PE+CuBTC+PE. Cutting the separator into pieces of 22 mm in diameter for further use.

### Comparative Embodiment 1

Identical to Embodiment 1-1 except that the separator is a 7 µm-thick PE film (manufactured by Entek) (the separator is labeled as PE-1).

### Comparative Embodiment 2

Identical to Embodiment 1-1 except that the separator is a 7 µm-thick PP film (manufactured by Entek) (the separator is labeled as PP).

### Comparative Embodiment 3

Identical to Embodiment 1-1 except that the separator is a 16 µm-thick PE film (manufactured by Entek) (the separator is labeled as PE-2). Table 1 and Table 2 show the relevant parameters and performance test results of the embodiments and comparative embodiments.

**Table 1**

| | Separator | Thickness of polymer layer (µm) | Thickness of porous material layer (µm) | HET of porous material (m²/g) | Particle diameter of porous material (nm) | Pore channel diameter of porous material (nm) | Porosity of separator (%) | Pore channel diameter of separator (nm) | Number of cycles | Coulombic efficiency (%) |
|---|---|---|---|---|---|---|---|---|---|---|
| Embodiment 1-1 | PE-CuBTC | 7 | 2 | 1172 | 300 | 0.8 | 42 | 45 | 184 | 98.92 |
| Embodiment 1-2 | PE+CuBTC-1 | 7 | 2 | 1172 | 300 | 0.8 | 43 | 47 | 280 | 99.50 |
| Embodiment 1-3 | PE+ZIPS | 7 | 2 | 1300 | 200 | 0.34 | 40 | 42 | 269 | 99.47 |
| Embodiment 1-4 | PE+SAPO-34 | 7 | 2 | 430 | 450 | 0.43 | 46 | 48 | 278 | 99.48 |
| Embodiment 1-5 | PE+PIM1 | 7 | 2 | 820 | 800 | 0.32 | 42 | 44 | 282 | 99.51 |
| Embodiment 1-6 | PE+MCM41 | 7 | 2 | 850 | 600 | 2.5 | 41 | 44 | 256 | 99.45 |
| Embodiment 1-7 | PE+COF-1 | 7 | 2 | 230 | 150 | 0.9 | 43 | 46 | 273 | 99.45 |
| Embodiment 1-8 | PE+CuBTC-2 | 7 | 2 | 1172 | 300 | 0.8 | 35 | 10 | 192 | 99.32 |
| Embodiment 1-9 | PE+CuBTC-3 | 7 | 2 | 1172 | 300 | 0.8 | 65 | 150 | 189 | 99.28 |
| Embodiment 1-10 | PE+CuBTC-4 | 9 | 2 | 1172 | 300 | 0.8 | 41 | 43 | 284 | 99.51 |
| Embodiment 1-11 | PE+CuBTC-5 | 16 | 2 | 1172 | 300 | 0.8 | 43 | 45 | 288 | 99.52 |
| Embodiment 1-12 | PE+CuBTC-6 | 30 | 2 | 1172 | 300 | 0.8 | 44 | 47 | 264 | 99.40 |
| Embodiment 1-13 | PE+CuBTC-7 | 7 | 1 | 1172 | 300 | 0.8 | 42 | 44 | 253 | 99.35 |
| Embodiment 1-14 | PE+CuBTC-8 | 7 | 5 | 1172 | 300 | 0.8 | 46 | 49 | 231 | 99.23 |
| Embodiment 1-15 | PE+CuBTC-9 | 7 | 2 | 1172 | 300 | 0.8 | 20 | 30 | 168 | 99 |
| Embodiment 1-16 | PE+CuBTC-10 | 7 | 2 | 1172 | 300 | 0.8 | 80 | 70 | 172 | 99.01 |
| Embodiment 1-17 | PP+CuBTC | 7 | 2 | 1172 | 300 | 0.8 | 48 | 50 | 277 | 99.43 |
| Embodiment 1-18 | PE+CUBTC@PSS | 7 | 2 | 1172 | 300 | 0.8 | 42 | 46 | 282 | 99.50 |
| Embodiment 1-19 | PE+CuBTC@Cu | 7 | 2 | 1172 | 300 | 0.8 | 40 | 43 | 279 | 99.48 |
| Comparative Embodiment 1 | PE-1 | 7^{a} | / | / | / | / | 45 | 44 | 120 | 98.40 |
| Comparative Embodiment 2 | PP | 7^{a} | / | / | / | / | 43 | 42 | 105 | 98.33 |
| Comparative Embodiment 3 | PE-2 | 16^{a} | / | / | / | / | 42 | 46 | 135 | 98.48 |

Note: "/" in Table 1 represents absence of the relevant parameter; and the thickness of the polymer layer with superscript "a" is the thickness of the separator. A short circuit occurs when the capacities of the lithium metal batteries in Comparative Embodiments 1 to 3 decrease to 87%, 91%, and 89%, respectively, of the first-cycle discharge capacity. The number of cycles and the Coulombic efficiency set out in Table 1 are the number of cycles and the Coulombic efficiency of the lithium metal batteries cycled until occurrence of the short circuit in such comparative embodiments.

Overall, in contrast to Comparative Embodiments 1 to 3, the lithium metal batteries in Embodiments 1-1 to 1-19 of this application exhibit a higher Coulombic efficiency and a larger number of cycles, indicating that the lithium metal batteries of this application achieve a higher Coulombic efficiency and a longer cycle life.

As can be seen from Embodiments 1-2 to 1-7, by adjusting and controlling the pore channel diameter of the porous material to fall within the range specified herein, this application can improve the Coulombic efficiency and increase the number of cycles of the lithium-metal battery. The test results show that the lithium-metal batteries of this application achieve a high Coulombic efficiency and a long cycle life.

The type of the porous material generally affects the Coulombic efficiency and cycle life of the lithium metal battery. As can be seen from Embodiments 1-2 to 1-7, selecting a porous material that falls within the range specified herein can endow the lithium metal battery with a high Coulombic efficiency and a large number of cycles, so that the lithium metal battery achieves a high Coulombic efficiency and a long cycle life.

The specific surface area and particle diameter of the porous material generally affect the Coulombic efficiency and cycle life of the lithium metal battery. As can be seen from Embodiments 1-2 to 1-7, by adjusting and controlling the specific surface area and particle diameter of the porous material to fall within the ranges specified herein, this application endows the lithium metal battery with a high Coulombic efficiency and a large number of cycles, so that the lithium metal battery achieves a high Coulombic efficiency and a long cycle life.

The pore channel diameter of the separator and the porosity of the separator generally affect the Coulombic efficiency and cycle life of the lithium metal battery. As can be seen from Embodiment 1-2, Embodiments 1-8 to 1-9, and Embodiments 1-15 to 1-16, by adjusting and controlling the pore channel diameter of the separator to fall within the range specified herein, this application endows the lithium metal battery with a high Coulombic efficiency and a large number of cycles, so that the lithium metal battery achieves a higher Coulombic efficiency and a longer cycle life.

The thickness of the polymer layer generally affects the Coulombic efficiency and cycle life of the lithium metal battery. As can be seen from Embodiment 1-2 and Embodiments 1-10 to 1-12, by adjusting and controlling the thickness of the polymer layer to fall within the range specified herein, this application endows the lithium metal battery with a high Coulombic efficiency and a large number of cycles, so that the lithium metal battery achieves a high Coulombic efficiency and a long cycle life.

The thickness of the porous material layer generally affects the Coulombic efficiency and cycle life of the lithium metal battery. As can be seen from Embodiment 1-2 and Embodiments 1-13 to 1-14, by adjusting and controlling the thickness of the porous material layer to fall within the range specified herein, this application endows the lithium metal battery with a high Coulombic efficiency and a large number of cycles, so that the lithium metal battery achieves a high Coulombic efficiency and a long cycle life.

The material of the polymer layer generally affects the Coulombic efficiency and cycle life of the lithium metal battery. As can be seen from Embodiments 1-2 and 1-17, selecting a polymer layer material that falls within the range specified herein can endow the lithium metal battery with a high Coulombic efficiency and a large number of cycles, so that the lithium metal battery achieves a high Coulombic efficiency and a long cycle life.

The inclusion of polymers or metal ions inside the pore channels of the separator generally affects the Coulombic efficiency and cycle life of the lithium metal battery. As can be seen from Embodiment 1-2 and Embodiments 1-18 and 1-19, by modifying the interior of the pore channels of the separator with polymers or metal ions, this application endows the lithium metal battery with a larger number of cycles, so that the lithium metal battery achieves a longer cycle life.

**Table 2**

| | Separator | Thickness of first porous material layer (µm) | Thickness of first polymer layer (µm) | Thickness of second porous material layer (µm) | Thickness of separator (µm) | Thickness of second polymer layer (µm) | Porosity of separator (%) | Pore channel diameter of separator (mm) | Number of cycles | Coulombic efficiency (%) |
|---|---|---|---|---|---|---|---|---|---|---|
| Embodiment 1-2 | PE+CuBTC-1 | 2 | 7 | / | 9 | / | 42 | 45 | 280 | 99.50 |
| Embodiment 2-1 | CuHTC+PE+CuBTC-1 | 1 | 7 | 1 | 9 | / | 50 | 52 | 275 | 99.44 |
| Embodiment 2-2 | CuHTC+PE+CuHTC-2 | 2 | 7 | 2 | 11 | / | 48 | 50 | 224 | 99.2 |
| Embodiment 2-3 | CuHTC+PE+CuHTC-3 | 1 | 7 | 2 | 10 | / | 46 | 48 | 230 | 99.21 |
| Embodiment 2-4 | PE+CuBTC+PE | 2 | 7 | / | 9 | 7 | 45 | 52 | 266 | 99.41 |

| | | | | | | | | | | |
|---|---|---|---|---|---|---|---|---|---|---|
| Note: "/" in Table 2 represents absence of the relevant parameter. | | | | | | | | | | |

The separator of this application includes a polymer layer and a porous material layer. The stacking sequence of the polymer layer and the porous material layer generally affects the Coulombic efficiency and cycle life of the lithium metal battery. As can be seen from Embodiments 1-2 and Embodiments 2-1 to 2-4, when the stacking sequence of the polymer layer and the porous material layer falls within the range specified herein, this application can endow the lithium metal battery with a high Coulombic efficiency and a large number of cycles, so that the lithium metal battery achieves a high Coulombic efficiency and a long cycle life. FIG. 6A and FIG. 6B show SEM images, displayed at different magnifications, of the cross-section of the separator prepared in Embodiment 1-2 and sectioned along the thickness direction. In FIG. 6A, the two layers arranged top-down are the porous material layer and the polymer layer, respectively. As can be seen from FIG. 6A, the separator prepared in Embodiment 1-2 is relatively flat and dense on the whole, and the bonding between the porous material layer and the polymer layer is tight, without obvious cracks. In FIG. 6B, the two layers arranged top-down are the porous material layer and the polymer layer, respectively. As can be seen from FIG. 6B, there are pores at the junction between the porous material layer and the polymer layer, but the overall bonding between the porous material layer and the polymer layer is tight. To sum up, the separator prepared in Embodiment 1-2 of this application is dense and flat.

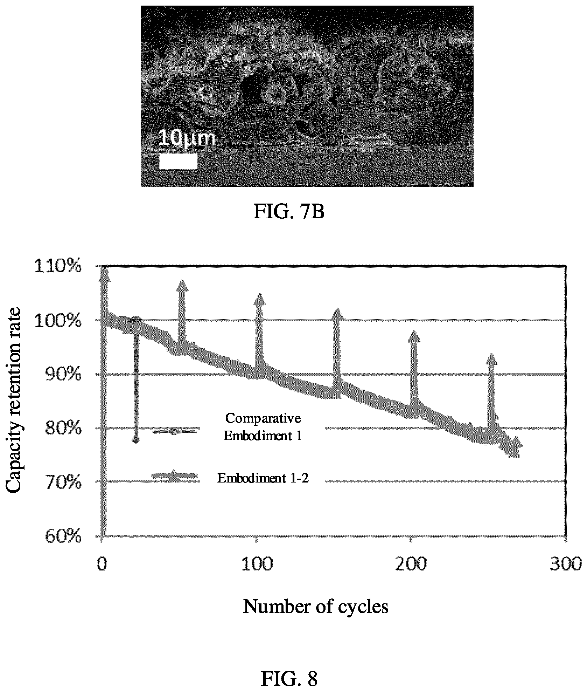

FIG. 7A is a cross-sectional SEM image of a negative electrode plate sectioned along a thickness direction after a lithium metal battery containing the negative electrode plate is cycled according to Embodiment 1-2 of this application; and FIG. 7B is a cross-sectional SEM image of a negative electrode plate sectioned along a thickness direction after a lithium metal battery containing the negative electrode plate is cycled according to Comparative Embodiment 1. As can be seen from FIG. 7A, after the lithium metal battery prepared in Embodiment 1-2 is cycled, the lithium metal deposited on the surface of the negative electrode plate of the lithium metal battery is relatively dense. The nonuniform structure shown in the dashed circle in the drawing is the nonuniform lithium metal generated when the negative electrode plate is cut by using an electron beam during sample making. In contrast, after the lithium metal battery in Comparative Embodiment 1 is cycled, the lithium metal layer deposited on the surface of the negative electrode plate of the lithium metal battery is relatively sparse, thereby resulting in a relatively low deposition density of the lithium metal layer.

The lithium metal batteries prepared in Embodiment 1-2 and Comparative Embodiment 1 of this application are cycled in accordance with the test method of the cycle capacity retention rate described above, so as to obtain a graph in FIG. 8 that shows a change of a cycle capacity retention rate versus the number of cycles of lithium metal batteries. As can be seen from FIG. 8, under the same cycling conditions, the cycle capacity retention rate of the lithium metal battery of Comparative Embodiment 1 fades to less than 80% at the 25^{th} cycle, while the cycle capacity retention rate of the lithium metal battery of Embodiment 1-2 does not fade to less than 80% until the 225^{th} cycle. This indicates that the lithium metal battery prepared in Embodiment 1-2 incurs slower fading of capacity and sustains a larger number of cycles. In other words, the lithium metal battery prepared in Embodiment 1-2 of this application achieves higher cycle performance and a longer cycle life.

It is hereby noted that the relational terms herein such as first and second are used only to differentiate an entity or operation from another entity or operation, and do not require or imply any actual relationship or sequence between the entities or operations. Moreover, the terms "include", "comprise", and any variation thereof are intended to cover a non-exclusive inclusion relationship by which a process, method, or object that includes or comprises a series of elements not only includes such elements, but also includes other elements not expressly specified or also includes inherent elements of the process, method, or object.

Different embodiments of this application are described in a correlative manner. For the same or similar part in one embodiment, reference may be made to another embodiment. Each embodiment focuses on differences from other embodiments.

What is described above is merely preferred embodiments of this application, but not intended to limit the protection scope of this application. Any modifications, equivalent replacements, improvements, and the like made without departing from the spirit and principles of this application still fall within the protection scope of this application.

## Claims

1. A separator, containing nanoscale and sub-nano scale pore channels, **characterized in that**, the separator comprises a polymer layer and a porous material layer, the porous material layer comprises a porous material, and the porous material comprises a metal-organic framework material, a covalent organic framework material, a molecular sieve material, or a microporous polymer; and
a pore channel diameter of the porous material is 0.1 nm to 10 nm, and a thickness of the porous material layer is 1 µm to 8 µm.

2. The separator according to claim 1, **characterized in that** the separator comprises the polymer layer and the porous material layer disposed on one surface of the polymer layer; or
the separator comprises the polymer layer and the porous material layer disposed on two surfaces of the polymer layer; or
the separator comprises the porous material layer and the polymer layer disposed on two surfaces of the porous material layer.

3. The separator according to claim 1 or 2, **characterized in that** a porosity of the separator is 20% to 80%.

4. The separator according to any one of claims 1 to 3, **characterized in that** the metal-organic framework material comprises at least one of MOF-69C, MOF-74, MOF-5, ZIF-67, ZIF-8, MIL-100(Cr), MIL-100(Fe), UIO-66, PCN61, or CuBTC;
the covalent organic framework material comprises at least one of COF-1, COF-5, COF-012, COF-103, COF-105, CTF-1, or ruC-505;
the molecular sieve material comprises at least one of MCM-41, SAPO-34, 3A molecular sieve, 4A molecular sieve, 5A molecular sieve, or 13X molecular sieve; and
the microporous polymer comprises PIM-1.

5. The separator according to any one of claims 1 to 4, **characterized in that**, a particle diameter of the porous material is 50 nm to 1000 nm.

6. The separator according to any one of claims 1 to 5, **characterized in that**, a specific surface area of the porous material is 200 m²/g to 2000 m²/g.

7. The separator according to any one of claims 1 to 6, **characterized in that**, a pore diameter of a pore structure of the polymer layer is 10 nm to 200 nm.

8. The separator according to any one of claims 1 to 7, **characterized in that**, a thickness of the polymer layer is 3 µm to 30 µm.

9. The separator according to any one of claims 1 to 8, **characterized in that**, a material of the polymer layer comprises at least one of polyethylene, polypropylene, polyvinylidene difluoride, polyimide, polyamide, polyacrylonitrile, polyethylene glycol, polyphenylene ether, polypropylene carbonate, polymethyl methacrylate, polyethylene terephthalate, polyethylene oxide, polyvinylidene difluoride-hexafluoropropylene, or polyvinylidene difluoride-chlorotrifluoroethylene.

10. The separator according to any one of claims 1 to 9 **characterized in that**, a pore channel diameter of the porous material is 0.1 nm to 5 nm.

11. The separator according to any one of claims 1 to 10, **characterized in that**,
(1) a pore channel diameter of the separator is 10 nm to 150 nm; or
(2) charged polymers or metal ions are comprised inside a pore channel of the separator, and the charged polymers comprise at least one of sodium polystyrene sulfonate, poly N-2-(dimethylaminopropyl)methacrylamide, or polyacrylic acid, and the metal ions comprise at least one of Cu²⁺, Zn²⁺, or Co³⁺.

12. The separator according to any one of claims 1 to 11, satisfying at least one of the following features:
(1) a pore channel diameter of the separator is 30 nm to 80 nm;
(2) a porosity of the separator is 35% to 65%;
(3) a pore channel diameter of the porous material is 0.1 nm to 1 nm;
(4) a thickness of the porous material layer is 1 µm to 5 µm;
(5) a pore diameter of a pore structure of the polymer layer is 20 nm to 80 nm;
(6) a thickness of the polymer layer is 5 µm to 16 µm; or
(7) a particle diameter of the porous material is 50 nm to 800 nm.

13. An electrochemical device, **characterized in that** the electrochemical device comprises an electrode assembly, and the electrode assembly comprises a positive electrode plate, a negative electrode plate, and the separator according to any one of claims 1 to 12.

14. An electrochemical device, **characterized in that** the electrochemical device comprises an electrode assembly; the electrode assembly comprises a positive electrode plate, a negative electrode plate, and the separator according to any one of claims 1 to 12; the separator comprises a polymer layer and a porous material layer disposed on one surface of the polymer layer; and a side, coated with the porous material layer, of the separator is oriented toward the negative electrode plate.

15. An electronic device, **characterized in that** the electronic device comprises the electrochemical device according to claim 13 or 14.
